# EUROPEAN PATENT APPLICATION

(11) **EP 2 228 466 A1**
(43) Date of publication of application: **15.09.2010**
(21) Application number: 10156156.1
(22) Date of filing: 11.03.2010
(51) Int. Cl.: C25B 1/04, C25B 15/08

(54) **Water electrolysis system**

(30) Priority: 12.03.2009 JP 2009059371; 25.01.2010 JP 2010013024
(71) Applicant: Honda Motor Co., Ltd., Tokyo 107-8556 (JP)
(72) Inventor: Taruya, Kenji, Saitama 351-0193 (JP); Okabe, Masanori, Saitama 351-0193 (JP); Haryu, Eiji, Saitama 351-0193 (JP); Nagaoka, Hisashi, Saitama 351-0193 (JP); Nakazawa, Koji, Saitama 351-0193 (JP)
(74) Representative: Trossin, Hans-Jürgen

(57) **Abstract**

A water electrolysis system (10) has a water electrolysis apparatus (12) for electrolyzing pure water, thereby producing hydrogen, a water storage apparatus (14) for separating between oxygen and residual water discharged from the water electrolysis apparatus (12), thereby storing the water, a water circulation apparatus (16) for circulating the water stored in the water storage apparatus (14) through the water electrolysis apparatus (12), and a water supply apparatus (18) for supplying the pure water prepared from city water to the water storage apparatus (14). An inlet (80a) is formed at one end of a return pipe (80) to introduce the oxygen and the residual water discharged from the water electrolysis apparatus (12) into a tank (78), and the position of the inlet (80a) is determined such that the inlet (80a) is constantly opened in the water stored in the tank (78).

## Description

### BACKGROUND OF THE INVENTION

### Field of the Invention:

The present invention relates to a water electrolysis system comprising a water electrolysis apparatus having current collectors and an electrolyte membrane disposed therebetween for electrolyzing a water, thereby generating oxygen at the anode side and generating hydrogen at the cathode side, and a water storage apparatus for separating between the oxygen and the residual water discharged from the water electrolysis apparatus, thereby storing the water. Description of the Related Art:

For example, a solid polymer fuel cell produces a direct-current electric energy when a fuel gas (a gas mainly composed of hydrogen such as a hydrogen gas) is supplied to an anode and an oxygen-containing gas (a gas mainly composed of oxygen such as air) is supplied to a cathode.

Conventionally a water electrolysis apparatus is used to produce the hydrogen gas as the fuel gas. The water electrolysis apparatus contains a solid polymer electrolyte membrane (an ion-exchange membrane) for decomposing water, thereby generating the hydrogen (and the oxygen). A membrane electrode assembly is prepared by forming an electrode catalyst layer on each surface of the solid polymer electrolyte membrane. Current collectors are disposed on the respective sides of the membrane electrode assembly, making up a unit. The unit is essentially similar in structure to the fuel cells described above.

A plurality of such units are stacked, a voltage is applied across the stack, and water is supplied to the current collector on the anode side. On the anodes of the membrane electrode assemblies, the water is decomposed to generate hydrogen ions (protons). The hydrogen ions permeate and move through the solid polymer electrolyte membranes to the cathodes, and bonded with electrons to generate hydrogen. On the anodes, oxygen generated together with the hydrogen ions (the protons) is discharged together with the residual water from the unit.

For example, a hydrogen storage/power generation system is disclosed as such a water electrolysis system in Japanese Laid-Open Patent Publication No. 10-068095. As shown in FIG. 11, the hydrogen storage/power generation system has two water electrolysis apparatuses 1, and a pure water supply pipe 2 for supplying pure water is connected to the water electrolysis apparatuses 1. Pure water stored in an oxygen/pure water tank 3 is supplied through the pipe 2 to an anode of each apparatus 1.

Oxygen generated on the anode of the water electrolysis apparatus 1 is introduced to the oxygen/pure water tank 3 due to the buoyancy. The oxygen pressure in the oxygen/pure water tank 3 is maintained at a predetermined pressure or less by a pressure control valve 4a, and the oxygen in the oxygen/pure water tank 3 is discharged through a valve 4b.

Hydrogen generated on the cathode of the water electrolysis apparatus 1 is transferred together with the pure water to a hydrogen drain tank 5, and separated from the pure water therein. The hydrogen pressure in the tank 5 is maintained at a predetermined pressure or less by a pressure control valve 6a, and the hydrogen is discharged through a valve 6b.

In conventional water electrolysis systems, the hydrogen on the cathode may be leaked through the solid polymer electrolyte membrane to the anode due to deterioration or failure of a component, etc. Thus, not only the oxygen and the pure water but also the hydrogen may be introduced to the oxygen/pure water tank 3. In this case, when the valve 4b is opened, the oxygen and the hydrogen in the tank 3 are discharged to the outside, so that a continuous hydrogen passage is formed from the outside through the tank 3 to the water electrolysis apparatus 1.

### SUMMARY OF THE INVENTION

An object of the present invention is to solve the above problems, thereby providing a water electrolysis system having a simple structure and which is capable of reliably prevent formation of a continuous hydrogen passage from a water electrolysis apparatus through a water storage apparatus in an oxygen discharge path to the outside.

The present invention relates to a water electrolysis system comprising a water electrolysis apparatus having current collectors and an electrolyte membrane disposed therebetween for electrolyzing water, thereby generating oxygen at an anode side and generating hydrogen at a cathode side, and a water storage apparatus for separating between the oxygen and residual water discharged from the water electrolysis apparatus, thereby storing the water.

The water storage apparatus has a tank for storing the water and an inlet for introducing the oxygen and the residual water discharged from the water electrolysis apparatus into the tank. The position of the inlet is determined such that the inlet is constantly opened in the water stored in the tank.

The present invention further relates to a water electrolysis system comprising a water electrolysis apparatus having current collectors and an electrolyte membrane disposed therebetween for electrolyzing a water, thereby generating oxygen at an anode side and generating hydrogen at a cathode side, a water storage apparatus for separating between the oxygen and residual water discharged from the water electrolysis apparatus, thereby storing the water, and a water circulation apparatus for circulating the water stored in the water storage apparatus through the water electrolysis apparatus.

The water storage apparatus has a tank for storing the water, an inlet for introducing the oxygen and the residual water discharged from the water electrolysis apparatus into the tank, and a water return outlet for returning the water in the tank through the water circulation apparatus to the water electrolysis apparatus. The inlet is positioned below the water return outlet.

In the present invention, the position of the inlet for introducing the oxygen and the residual water discharged from the water electrolysis apparatus into the tank is determined such that the inlet is constantly opened in the water stored in the tank. As a result, even when the hydrogen is introduced from the water electrolysis apparatus to the tank together with the oxygen and the residual water, the formation of a continuous hydrogen passage from the water electrolysis apparatus through the oxygen discharge path to the outside can be reliably prevented by the simple structure.

Furthermore, in the present invention, the inlet for introducing the oxygen and the residual water discharged from the water electrolysis apparatus into the tank is positioned below the water return outlet for returning the water in the tank through the water circulation apparatus to the water electrolysis apparatus. Thus, the inlet is constantly below the water surface in the tank. As a result, the formation of a continuous hydrogen passage from the water electrolysis apparatus through the oxygen discharge path to the outside can be reliably prevented in the simple structure.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a schematic structural explanatory view showing a water electrolysis system according to a first embodiment of the present invention;
FIG. 2 is an exploded perspective explanatory view showing a unit cell in the water electrolysis system;
FIG. 3 is a schematic structural explanatory view showing a water electrolysis system according to a second embodiment of the present invention;
FIG. 4 is a schematic structural explanatory view showing a water electrolysis system according to a third embodiment of the present invention;
FIG. 5 is a schematic structural explanatory view showing a water electrolysis system according to a fourth embodiment of the present invention;
FIG. 6 is an explanatory view showing main components of a water electrolysis system according to a fifth embodiment of the present invention;
FIG. 7 is an explanatory view showing main components of a water electrolysis system according to a sixth embodiment of the present invention;
FIG. 8 is an explanatory view showing main components of a water electrolysis system according to a seventh embodiment of the present invention;
FIG. 9 is an explanatory view showing main components of a water electrolysis system according to an eighth embodiment of the present invention;
FIG. 10 is an explanatory view showing main components of a water electrolysis system according to a ninth embodiment of the present invention; and

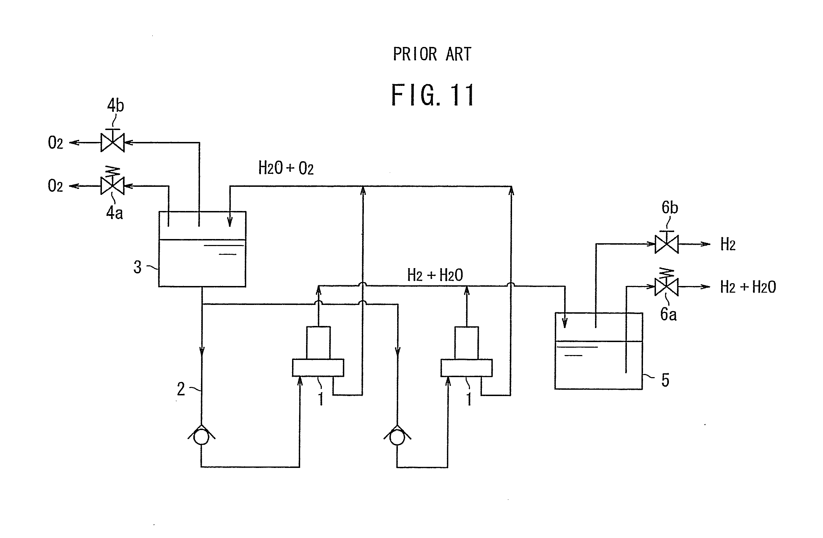

FIG. 11 is a schematic explanatory view showing a hydrogen storage/power generation system disclosed in Japanese Laid-Open Patent Publication No. 10-068095.

### DESCRIPTION OF THE PREFERRED EMBODIMENTS

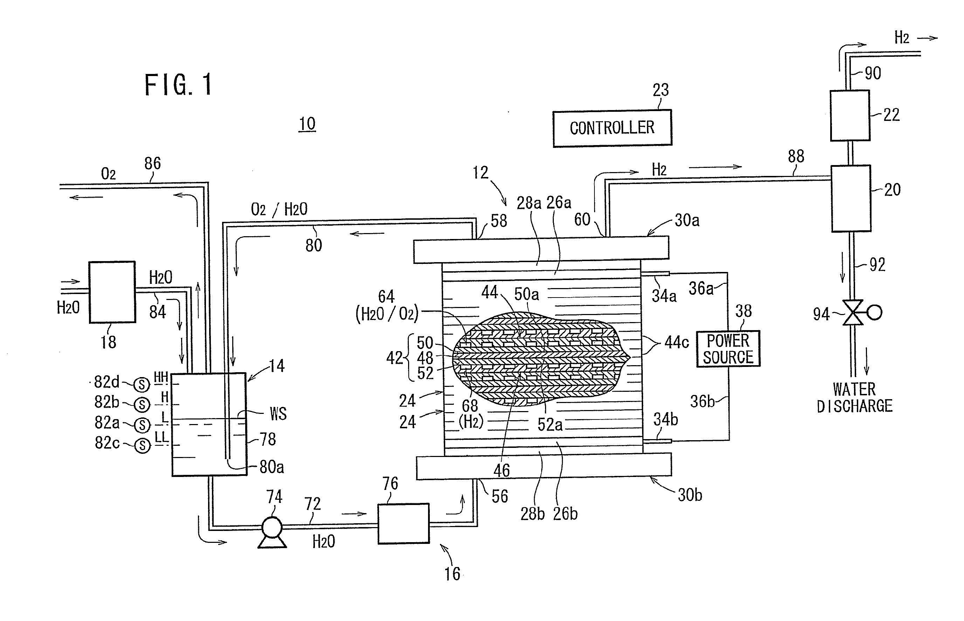

As shown in FIG. 1, a water electrolysis system 10 according to a first embodiment of the present invention comprises a water electrolysis apparatus 12 for electrolyzing water (pure water), thereby producing oxygen and high-pressure hydrogen (whose pressure is higher than normal pressure), a water storage apparatus 14 for separating between the oxygen and residual water discharged from the water electrolysis apparatus 12, thereby storing the separated water, a water circulation apparatus 16 for circulating the water stored in the water storage apparatus 14 through the water electrolysis apparatus 12, a water supply apparatus 18 for supplying the pure water prepared from city water to the water storage apparatus 14, a gas-liquid separator 20 for removing water contained in the high-pressure hydrogen discharged from the water electrolysis apparatus 12, a hydrogen dehumidifier 22 for adsorbing and removing water contained in the hydrogen discharged from the gas-liquid separator 20, and a controller (a controlling unit) 23.

The water electrolysis apparatus 12 is an apparatus for producing the high-pressure hydrogen, and may be for producing normal pressure hydrogen. The normal pressure hydrogen may be defined to include a case in which the generated oxygen and hydrogen have the same pressure.

In the water electrolysis apparatus 12, a plurality of unit cells 24 are stacked. On one end of the unit cells 24 in the stacking direction, a terminal plate 26a, an insulating plate 28a, and an end plate 30a are disposed in this order toward the outside. On the other end of the unit cells 24 in the stacking direction, a terminal plate 26b, an insulating plate 28b, and an end plate 30b are disposed in this order toward the outside. Such plates and unit cells between the end plates 30a, 30b are integrally held by fastening.

Terminals 34a, 34b extending toward the outside are formed on side surfaces of the terminal plates 26a, 26b, respectively. The terminals 34a, 34b are electrically connected to a power source 38 by wirings 36a, 36b, respectively. The terminal 34a at the positive electrode (anode) side is connected to the plus pole of the power source 38, and the terminal 34b at the negative electrode (cathode) side is connected to the minus pole of the power source 38.

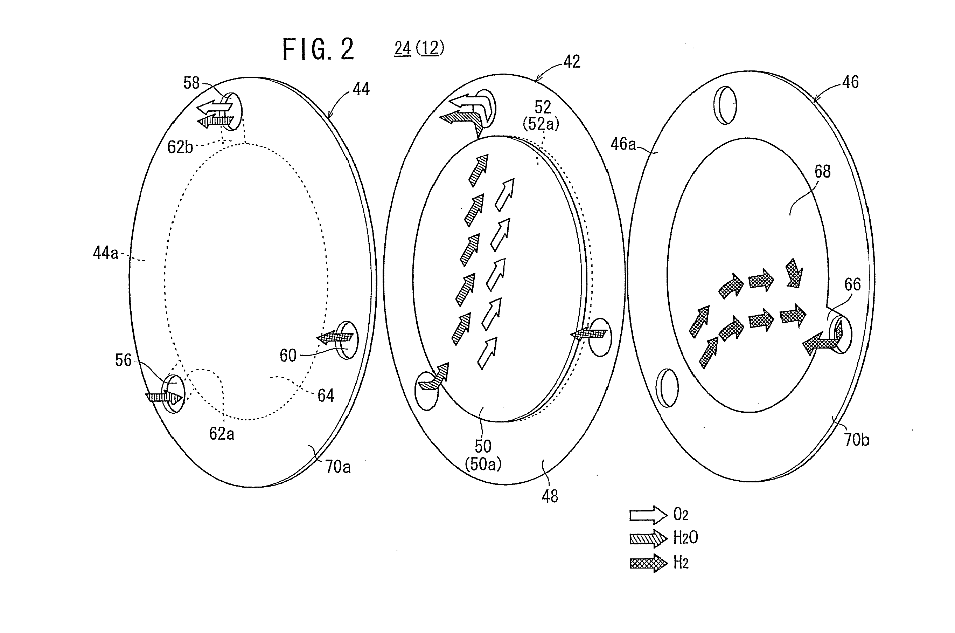

As shown in FIG. 2, the unit cell 24 has an anode-side separator 44 and a cathode-side separator 46, and a disc-shaped membrane electrode assembly 42 sandwiched therebetween. The anode-side separator 44 and the cathode-side separator 46 have disc shapes, and may be composed of a carbon member, a steel plate, a stainless steel plate, a titanium plate, an aluminum plate, a plated steel plate, etc. A surface of the metal may be covered with an anticorrosion-treated metal plate by press molding, or alternatively may be subjected to a surface anticorrosion treatment after cutting.

For example, the membrane electrode assembly 42 contains a solid polymer electrolyte membrane 48 prepared by impregnating a thin perfluorosulfonic acid membrane with water, and further contains an anode-side current collector 50 and a cathode-side current collector 52, which are disposed respectively on the opposite surfaces of the solid polymer electrolyte membrane 48.

An anode catalyst layer 50a and a cathode catalyst layer 52a are formed respectively on the opposite surfaces of the solid polymer electrolyte membrane 48. For example, the anode catalyst layer 50a may comprise a Ru (ruthenium)-based catalyst, and the cathode catalyst layer 52a may comprise a platinum catalyst.

For example, the anode-side current collector 50 and the cathode-side current collector 52 may be composed of a sintered body of a spherical atomized titanium powder (a porous conductive material). The anode-side current collector 50 and the cathode-side current collector 52 each have a flat surface, which is etched after it is cut to shape. The porosities of the anode-side current collector 50 and the cathode-side current collector 52 may be 10% to 50%, more preferably 20% to 40%.

A water supply passage 56 for supplying the water (the pure water), a discharge passage 58 for discharging the oxygen generated by a reaction and the unreacted water (a fluid mixture), and a hydrogen passage 60 for transferring the hydrogen generated by a reaction are formed in the outer circumferential edge portions of the unit cells 24 continuously in the stacking direction.

A supply channel 62a connected to the water supply passage 56 and a discharge channel 62b connected to the discharge passage 58 are formed on a surface 44a of the anode-side separator 44 facing the membrane electrode assembly 42. A first flow field 64 is connected to the supply channel 62a and the discharge channel 62b on the surface 44a. The first flow field 64 is formed within a surface area of the anode-side current collector 50, and has a plurality of flow passage grooves, embossed portions, etc.

A discharge channel 66 connected to the hydrogen passage 60 is formed on a surface 46a of the cathode-side separator 46 facing the membrane electrode assembly 42. A second flow field 68 is connected to the discharge channel 66 on the surface 46a. The second flow field 68 is formed within a surface area of the cathode-side current collector 52, and has a plurality of flow passage grooves, embossed portions, etc.

The outer circumferential edge portions of the anode-side separator 44 and the cathode-side separator 46 are integrated by seal members 70a, 70b. The seal members 70a, 70b may comprise a seal material, a cushion material, or a gasket material such as EPDM, NBR, fluororubber, silicone rubber, fluorosilicone rubber, butyl rubber, natural rubber, styrene rubber, chloroprene rubber, or acrylic rubber, etc.

As shown in FIG. 1, the water circulation apparatus 16 has a circulation pipe 72 connected to the water supply passage 56 in the water electrolysis apparatus 12. The circulation pipe 72 is connected to the bottom of a tank 78 in the water storage apparatus 14, and a circulation pump 74 and an ion exchanger 76 are connected to the circulation pipe 72.

One end of a return pipe 80 is connected to the top of the tank 78, and the other end is connected to the discharge passage 58 in the water electrolysis apparatus 12. An inlet 80a for introducing the oxygen and the residual water discharged from the water electrolysis apparatus 12 into the tank 78 is formed on the one end of the return pipe 80. The position of the inlet 80a is determined such that the inlet 80a is constantly opened in the water stored in the tank 78.

A water level detector, such as water level detecting sensors 82a to 82d, is formed in the tank 78 to detect the water level WS in comparison with a predetermined level. A detection signal from the water level detecting sensors 82a to 82d is inputted into the controller 23.

The water level detecting sensor 82a is used for detecting whether the water level WS drops to a predetermined lower level (L), the water level detecting sensor 82b is used for detecting whether the water level WS rises to a predetermined higher level (H), the water level detecting sensor (the lower limit water level detector) 82c is used for detecting whether the water level WS drops to a predetermined lower limit level (LL), and the water level detecting sensor 82d is used for detecting whether the water level WS rises to a predetermined higher limit level (HH).

The tank 78 is connected to a pure water supply pipe 84 extending from the water supply apparatus 18, and to an oxygen discharge pipe 86 for discharging the oxygen separated from the pure water in the tank 78.

One end of a high-pressure hydrogen pipe 88 is connected to the hydrogen passage 60 in the water electrolysis apparatus 12, and the other end is connected to the gas-liquid separator 20. The water contained in the high-pressure hydrogen is removed by the gas-liquid separator 20, the resultant hydrogen is dehumidified by the hydrogen dehumidifier 22, and the obtained dry hydrogen is introduced to a dry hydrogen pipe 90. A drainpipe 92 is connected to the bottom of the gas-liquid separator 20, and a water discharge valve 94 is connected to the drainpipe 92.

The operation of the water electrolysis system 10 will be described below.

At the start of the operation of the water electrolysis system 10, the pure water prepared from the city water is supplied from the water supply apparatus 18 to the tank 78 in the water storage apparatus 14.

The water in the tank 78 is supplied by the circulation pump 74 in the water circulation apparatus 16 through the circulation pipe 72 to the water supply passage 56 in the water electrolysis apparatus 12. Meanwhile, a voltage is applied to the terminals 34a, 34b of the terminal plates 26a, 26b by the power source 38 electrically connected thereto.

As shown in FIG. 2, in each unit cell 24, the water is supplied from the water supply passage 56 to the first flow field 64 on the anode-side separator 44, and is transferred along the anode-side current collector 50.

The water is electrically decomposed on the anode catalyst layer 50a to generate hydrogen ions, electrons, and oxygen. The hydrogen ions generated by the positive electrode reaction permeate through the solid polymer electrolyte membrane 48 to the cathode catalyst layer 52a, and bonded with electrons to produce hydrogen.

Thus, the hydrogen flows through the second flow field 68 between the cathode-side separator 46 and the cathode-side current collector 52. The hydrogen is under a pressure higher than the pressure in the water supply passage 56, and thereby can be transferred in the hydrogen passage 60 and discharged to the outside of the water electrolysis apparatus 12.

A fluid mixture of the oxygen generated by the reaction and the unreacted water flows in the first flow field 64, and is discharged from the discharge passage 58 to the return pipe 80 in the water circulation apparatus 16 (see FIG. 1). The oxygen and the unreacted water are introduced to the tank 78 and separated therein. The separated water is introduced through the circulation pipe 72 and the ion exchanger 76 to the water supply passage 56 by the circulation pump 74. The separated oxygen is discharged through the oxygen discharge pipe 86 to the outside.

The hydrogen generated in the water electrolysis apparatus 12 is transferred through the high-pressure hydrogen pipe 88 to the gas-liquid separator 20. Water vapor contained in the hydrogen is removed by the gas-liquid separator 20, and then the resultant hydrogen is dehumidified by the hydrogen dehumidifier 22 and introduced to the dry hydrogen pipe 90.

In this case, the pressure in the second flow field 68, in which the hydrogen is generated, is higher than that in the first flow field 64, in which the oxygen is generated. Therefore, the hydrogen generated in the second flow field 68 may readily permeate through the solid polymer electrolyte membrane 48 to the first flow field 64. The hydrogen transferred to the first flow field 64 is discharged to the return pipe 80 and introduced to the tank 78 together with the unreacted water and the oxygen.

In the first embodiment, the inlet 80a formed at the one end of the return pipe 80 is constantly opened in the water stored in the tank 78. The inlet 80a is constantly below the water level WS.

Thus, even when the hydrogen is introduced from the water electrolysis apparatus 12 to the tank 78 together with the oxygen and the residual water, the formation of a continuous hydrogen passage from the water electrolysis apparatus 12 through the oxygen discharge path (i.e., the return pipe 80, the internal space of the tank 78, and the oxygen discharge pipe 86) to the outside can be reliably prevented in the simple structure.

In addition, in the first embodiment, the tank 78 has the water level detecting sensors 82a to 82d for detecting the water level WS in the tank 78 in comparison with the predetermined levels.

Specifically, the water level detecting sensor 82a is used for detecting whether the water level WS drops to the predetermined lower level (L). When the drop of the water level WS to the lower level (L) is detected, the pure water addition from the water supply apparatus 18 to the tank 78 is instructed by the controller 23. Then, the water level detecting sensor 82b is used for detecting whether the water level WS rises to the predetermined higher level (H). When the rise of the water level WS to the higher level (H) is detected, the pure water addition from the water supply apparatus 18 to the tank 78 is stopped by the controller 23.

Furthermore, the water level detecting sensor 82c is used for detecting whether the water level WS drops to the predetermined lower limit level (LL). When the drop of the water level WS to the lower limit level (LL) is detected, the operation of the water electrolysis system 10 is stopped by the controller 23 due to system malfunction. Further, the water level detecting sensor 82d is used for detecting whether the water level WS rises to the predetermined higher limit level (HH). When the rise of the water level WS to the higher limit level (HH) is detected, the operation of the water electrolysis system 10 is stopped by the controller 23 due to system malfunction.

The desired water electrolysis treatment can be efficiently carried out in the water electrolysis system 10 successfully in this manner.

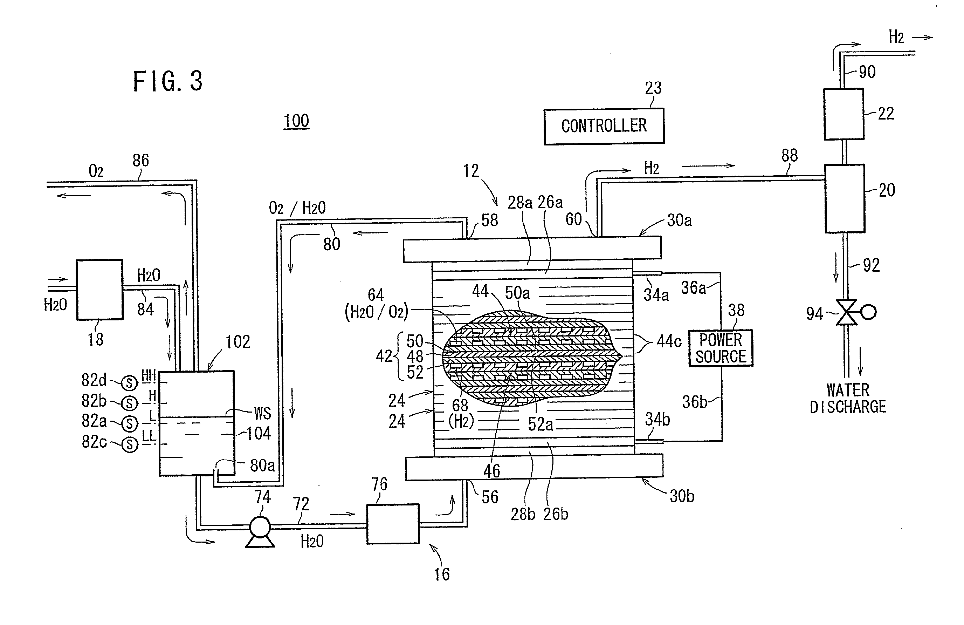

FIG. 3 is a schematic structural explanatory view showing a water electrolysis system 100 according to a second embodiment of the present invention.

The common components in the water electrolysis system 10 of the first embodiment and the water electrolysis system 100 of the second embodiment are represented by the same numerals, and duplicate explanations therefor are omitted. Also in third and other following embodiments, the duplicate explanations are omitted in the same manner.

The water electrolysis system 100 has a water storage apparatus 102, and an inlet 80a formed at one end of a return pipe 80 is opened in the bottom of a tank 104 in the water storage apparatus 102.

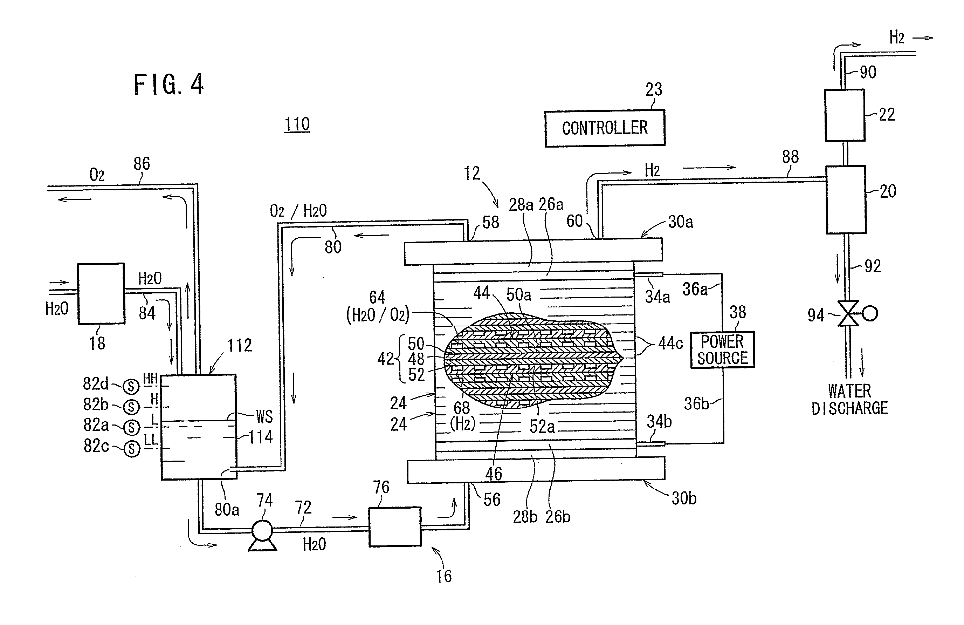

FIG. 4 is a schematic structural explanatory view showing a water electrolysis system 110 according to a third embodiment of the present invention.

The water electrolysis system 110 has a water storage apparatus 112, and an inlet 80a formed at one end of a return pipe 80 is opened in a side surface of a tank 114 in the water storage apparatus 112.

In the second and third embodiments, the inlets 80a are constantly positioned below the water level WS. Thus, the second and third embodiments have the same advantageous effects as the first embodiment.

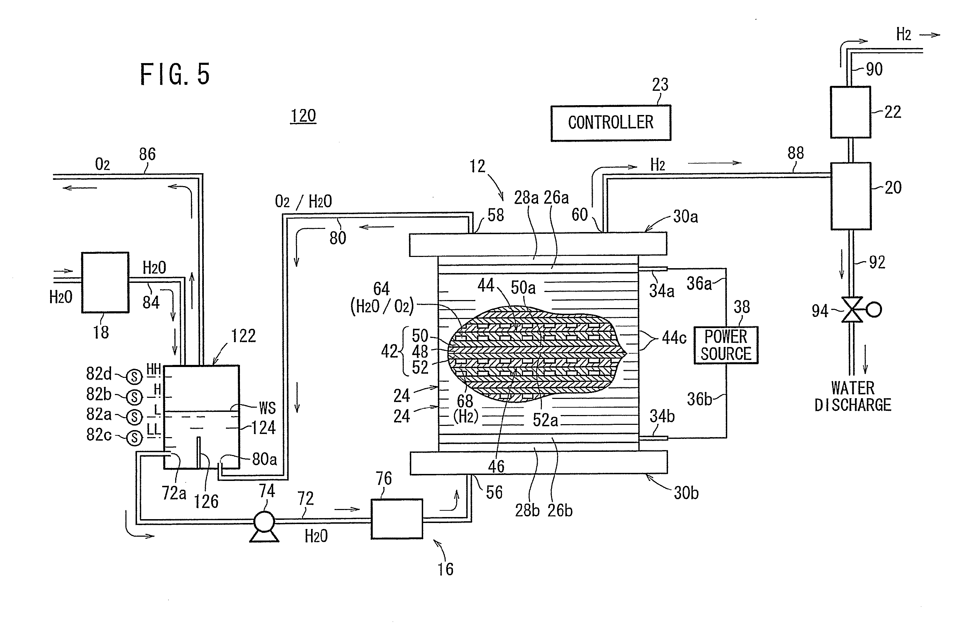

FIG. 5 is a schematic structural explanatory view showing a water electrolysis system 120 according to a fourth embodiment of the present invention.

The water electrolysis system 120 has a water storage apparatus 122, and an inlet 80a formed at one end of a return pipe 80 is opened in the bottom of a tank 124 in the water storage apparatus 122. A water return outlet 72a of a circulation pipe 72 is formed in a side surface of the tank 124. A partition plate 126 is disposed in the tank 124, whereby the oxygen (and the hydrogen) introduced from the inlet 80a of the return pipe 80 to the tank 124 is prevented from being sucked from the water return outlet 72a.

In the fourth embodiment, the inlet 80a for introducing the oxygen and the residual water discharged from the water electrolysis apparatus 12 into the tank 124 is positioned below the water return outlet 72a for returning the water in the tank 124 to the water electrolysis apparatus 12.

The inlet 80a is constantly positioned below the water level WS in the tank 124. As a result, the formation of a continuous hydrogen passage from the water electrolysis apparatus 12 through the oxygen discharge path to the outside can be reliably prevented in the simple structure. Thus, the fourth embodiment has the same advantageous effects as the first to third embodiments.

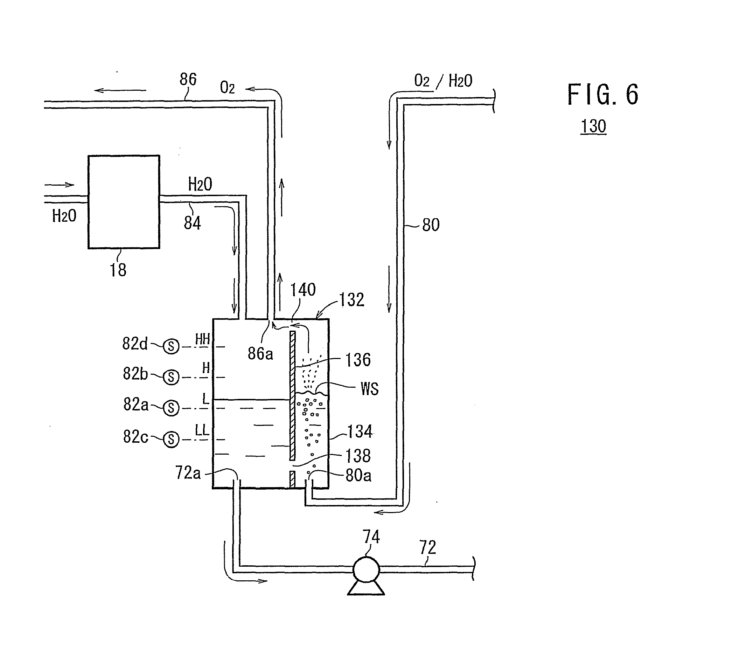

FIG. 6 is an explanatory view showing main components of a water electrolysis system 130 according to a fifth embodiment of the present invention.

The water electrolysis system 130 has a water storage apparatus 132. An inlet 80a of a return pipe 80 and a water return outlet 72a of a circulation pipe 72 are opened in the bottom of a tank 134 in the water storage apparatus 132. A partition wall member 136 is disposed in the tank 134.

The partition wall member 136 is a plate-like member, and extends upwardly above a predetermined higher limit level (HH) in the tank 134. In a lower portion of the partition wall member 136, a lower opening 138 is formed and is in communication with the water return outlet 72a. In or around an upper portion of the partition wall member 136, an upper opening 140 is formed and is in communication with a discharge outlet 86a of an oxygen discharge pipe 86. The upper opening 140 may be provided in the form of a hole or holes and the like in the partition wall member 136. Otherwise, the upper opening 140 may be provided in the form of a gap or gaps and the like between an upper end of the partition wall member 136 and a top plate of the tank 134.

When the unreacted water and the oxygen together with the hydrogen are introduced into the tank 134 through the inlet 80a through the return pipe 80, the liquid surface of the water tends to be unstable due to the gas (oxygen and hydrogen) in the water.

In the fifth embodiment having the above structure, since the partition wall member 136 is formed in the tank 134, it is possible to reliably prevent the liquid surface on a part of the tank 134 having water level detecting sensors 82a to 82d from ruffling. Accordingly, advantageous effects can be obtained such that an error in detecting the position of liquid surface, i.e., the water level WS by the water level detecting sensors 82a to 82d can be prevented as much as possible.

Incidentally, the gas components introduced from the inlet 80a into the tank 134 are discharged from the upper opening 140 around the upper portion of the partition wall member 136 to the discharge outlet 86a of the oxygen discharge pipe 86. On the other hand, the water introduced from the inlet 80a into the tank 134 is supplied from the lower opening 138 in the lower portion of the partition wall member 136 to the part of the tank 134 having the water level detecting sensors 82a to 82d.

In this case, an upper end of the partition wall member 136 is positioned above the higher limit level (HH). Therefore, it is possible to reliably prevent the water from flowing out from the part having the inlet 80a through the upper opening 140.

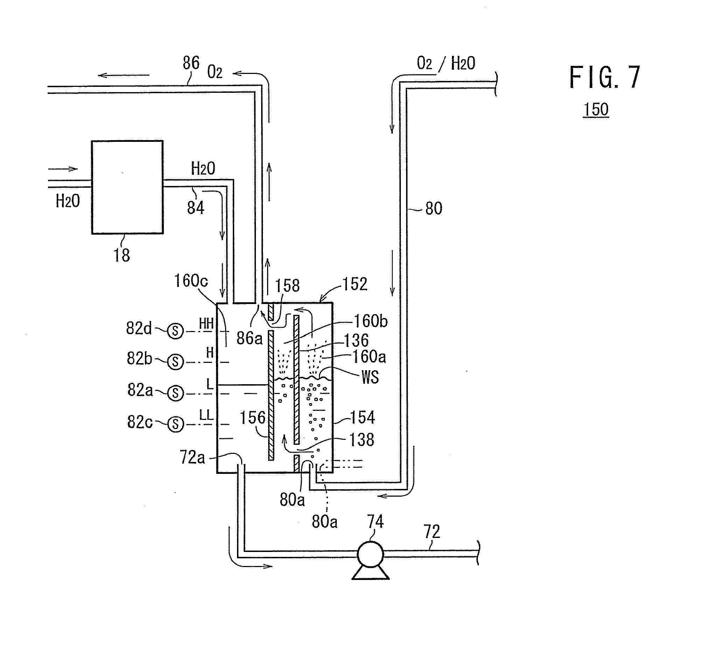

FIG. 7 is an explanatory view showing main components of a water electrolysis system 150 according to a sixth embodiment of the present invention.

The water electrolysis system 150 has a water storage apparatus 152. A plurality of, e.g., two partition wall members 136, 156 are disposed in a tank 154 of the water storage apparatus 152.

The partition wall members 136, 156 are positioned substantially in parallel to each other. The partition wall member 156 is in contact with a top plate of the tank 154 and is positioned upwardly away from the bottom of the tank 154 by a predetermined distance. In an upper portion of the partition wall member 156, an upper opening 158 is formed for discharging the gas components from a discharge outlet 86a of an oxygen discharge pipe 86.

In the sixth embodiment having the above structure, the inside of the tank 154 is divided into three parts 160a, 160b, 160c by the two partition wall members 136, 156.
Thus, the water and the oxygen flowing back into the tank 154 from an inlet 80a of a return pipe 80, are first introduced into the first part 160a for gas-liquid separation.

The separated gas components are discharged from the discharge outlet 86a through and around the upper portion of the partition wall member 136 and the upper opening 158 of the partition wall member 156. On the other hand, the water moves from the first part 160a to the second part 160b through a lower opening 138. Thereafter, the water is supplied to the third part 160c from below the partition wall member 156.

Accordingly, even if the gas components in the water supplied in the first part 160a causes the ruffling of the liquid surface, the ruffling of the liquid surface is reduced in the second part 160b and the ruffling is further prevented as much as possible in the third part 160c, advantageously. Furthermore, even if the water flows out from around the upper portion of the partition wall member 136 to the second part 160b, the ruffling of the liquid surface is not caused in the third part 160c because of a liquid-surface-ruffling prevention function of the partition wall member 156.

In the sixth embodiment, the inlet 80a is opened in the bottom of the tank 154. The present invention, however, is not limited to this arrangement. For example, the inlet 80a may be opened in the lower side surface of the tank 154 near the bottom (see dashed double-dotted lines in FIG. 7). On the other hand, a water return outlet 72a of a circulation pipe 72 is opened in the bottom of the tank 154. Otherwise, as shown in FIG. 5, for example, the water return outlet 72a may be formed in a lower side surface of the tank 154 near the bottom.

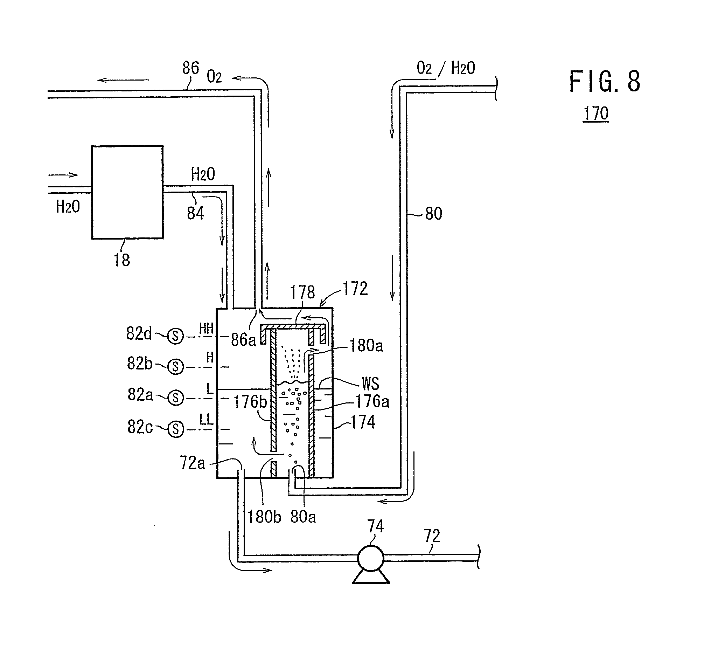

FIG. 8 is an explanatory view showing main components of a water electrolysis system 170 according to a seventh embodiment of the present invention.

The water electrolysis system 170 has a water storage apparatus 172. Partition wall members 176a, 176b are disposed in a tank 174 of the water storage apparatus 172. The partition wall members 176a, 176b are provided so that an inlet 80a of a return pipe 80 is sandwiched between them. On upper ends of the partition wall members 176a, 176b, a lid member 178 is integrally disposed. In an upper portion of the partition wall member 176a, an upper opening 180a is formed, and a lower opening 180b is formed in a lower portion of the partition wall member 176b.

In the seventh embodiment having the above structure, the inlet 80a of the return pipe 80 is opened between the pair of partition wall members 176a, 176b. The ruffling of the liquid surface between the partition wall members 176a, 176b does not affect other parts in the tank 174.

Also, since the lid member 178 is disposed on the upper ends of the partition wall members 176a, 176b, water does not splash in the outside of the partition wall members 176a, 176b. Thus, the seventh embodiment has the same advantageous effects as the fifth and sixth embodiments.

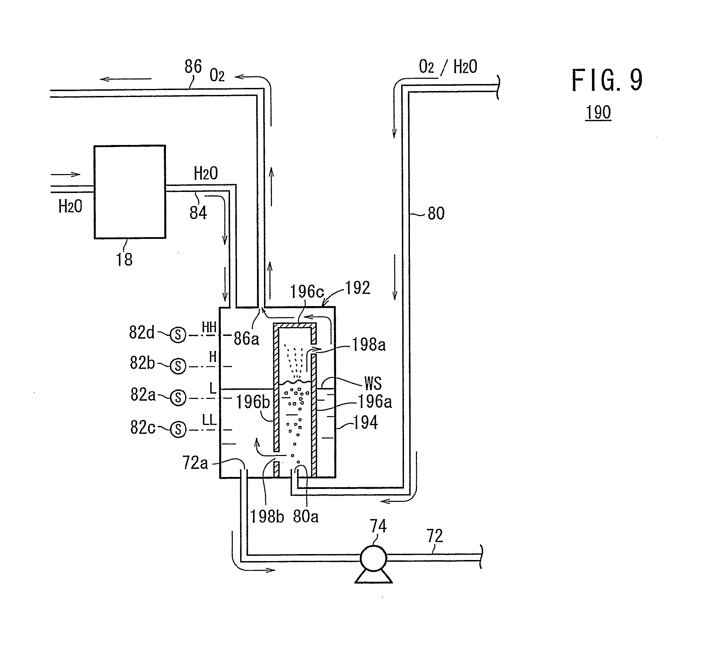

FIG. 9 is an explanatory view showing main components of a water electrolysis system 190 according to an eighth embodiment of the present invention.

The water electrolysis system 190 has a water storage apparatus 192. A pair of partition wall members 196a, 196b is disposed in a tank 194 of the water storage apparatus 192. The partition wall members 196a, 196b are integrally formed by a top plate member 196c. In a space defined by the partition wall members 196a, 196b and the top plate member 196c, an inlet 80a of a return pipe 80 is opened. In an upper portion of the partition wall member 196a, an upper opening 198a is formed, and a lower opening 198b is formed in a lower portion of the partition wall member 196b.

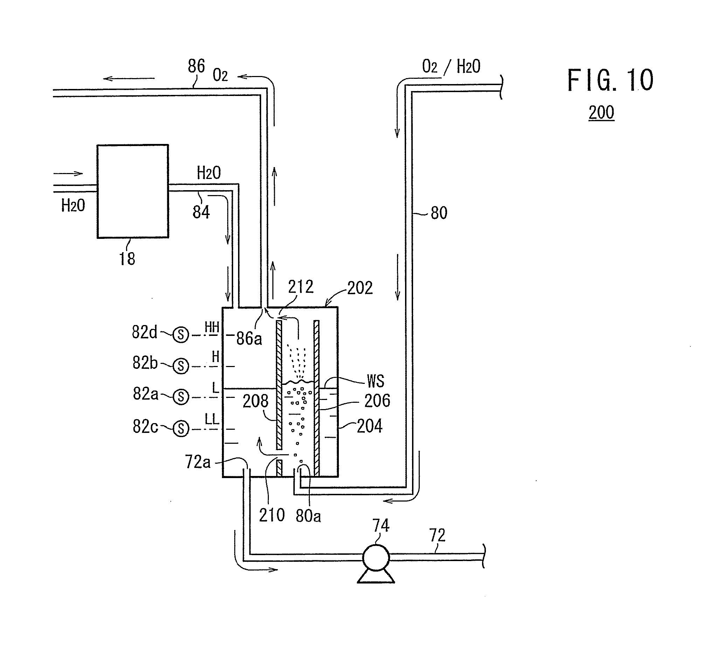

FIG. 10 is an explanatory view showing main components of a water electrolysis system 200 according to a ninth embodiment of the present invention.

The water electrolysis system 200 has a water storage apparatus 202. Two partition wall members 206, 208 are disposed in a tank 204 of the water storage apparatus 202. An inlet 80a of a return pipe 80 is opened between the partition wall members 206, 208. In a lower part of the partition wall member 208, a lower opening 210 is formed. There is an open space above the upper ends of the partition wall members 206, 208, so that an upper opening 212 is formed between a top plate of the tank 204 and the upper ends of the partition wall members 206, 208.

Thus, the eighth and ninth embodiments with the above structures have substantially the same advantageous effects as the seventh embodiment shown in FIG. 8.

A water electrolysis system (10) has a water electrolysis apparatus (12) for electrolyzing pure water, thereby producing hydrogen, a water storage apparatus (14) for separating between oxygen and residual water discharged from the water electrolysis apparatus (12), thereby storing the water, a water circulation apparatus (16) for circulating the water stored in the water storage apparatus (14) through the water electrolysis apparatus (12), and a water supply apparatus (18) for supplying the pure water prepared from city water to the water storage apparatus (14). An inlet (80a) is formed at one end of a return pipe (80) to introduce the oxygen and the residual water discharged from the water electrolysis apparatus (12) into a tank (78), and the position of the inlet (80a) is determined such that the inlet (80a) is constantly opened in the water stored in the tank (78).

## Claims

1. A water electrolysis system comprising:
a water electrolysis apparatus (12) including current collectors (50, 52) and an electrolyte membrane (48) disposed therebetween for electrolyzing water, thereby generating oxygen at an anode side and generating hydrogen at a cathode side; and
a water storage apparatus (14) for separating between the oxygen and residual water discharged from the water electrolysis apparatus (12), thereby storing the water,
wherein the water storage apparatus (14) includes a tank (78) for storing the water and an inlet (80a) for introducing the oxygen and the residual water discharged from the water electrolysis apparatus (12) into the tank (78), and
the position of the inlet (80a) is determined such that the inlet (80a) is constantly opened in the water stored in the tank (78).

2. A water electrolysis system according to claim 1, further comprising a water circulation apparatus (16) for circulating the water stored in the water storage apparatus (14) through the water electrolysis apparatus (12).

3. A water electrolysis system according to claim 1, further comprising a water supply apparatus (18) for supplying the water to the water storage apparatus (14), wherein the water storage apparatus (14) includes a water level detector (82a to 82d) for detecting a water level in the tank (78) in comparison with a predetermined level, and
the water supply from the water supply apparatus (18) to the water storage apparatus (14) is controlled based on a detection signal from the water level detector (82a to 82d).

4. A water electrolysis system according to claim 3,
wherein the water storage apparatus (14) includes a lower limit water level detector (82c) for detecting the water level in the tank (78) in comparison with a predetermined lower limit level, and
operation of the water electrolysis apparatus (12) is stopped based on a detection signal from the lower limit water level detector (82c).

5. A water electrolysis system according to claim 1,
wherein the water storage apparatus (132) includes a partition wall member (136) disposed in the tank (134), and
an upper end of the partition wall member (136) is positioned above a predetermined higher limit level in the tank (134).

6. A water electrolysis system according to claim 5,
wherein the tank (134) includes:
a water return outlet (72a) for returning the water in the tank (134) to the water electrolysis apparatus (12) through the water circulation apparatus (16); and
a discharge outlet (86a) for discharging a separated gas component, and
wherein a lower opening (138) is formed in a lower portion of the partition wall member (136) and is in communication with the water return outlet (72a), and an upper opening (140) is formed around an upper portion of the partition wall member (136) and is in communication with the discharge outlet (86a).

7. A water electrolysis system according to claim 5,
wherein a plurality of the partition wall members (136) are provided.

8. A water electrolysis system comprising:
a water electrolysis apparatus (12) including current collectors (50, 52) and an electrolyte membrane (48) disposed therebetween for electrolyzing water, thereby generating oxygen at an anode side and generating hydrogen at a cathode side,
a water storage apparatus (122) for separating between the oxygen and residual water discharged from the water electrolysis apparatus (12), thereby storing the water, and
a water circulation apparatus (16) for circulating the water stored in the water storage apparatus (122) through the water electrolysis apparatus (12),
wherein the water storage apparatus (122) includes a tank (124) for storing the water, an inlet (80a) for introducing the oxygen and the residual water discharged from the water electrolysis apparatus (12) into the tank (124), and a water return outlet (72a) for returning the water in the tank (124) through the water circulation apparatus (16) to the water electrolysis apparatus (12), and
the inlet (80a) is positioned below the water return outlet (72a).

9. A water electrolysis system according to claim 8, wherein a partition plate (126) is formed in the tank (124) to prevent the oxygen and the hydrogen introduced from the inlet (80a) into the tank (124) from being sucked into the water return outlet (72a).
